Europäisches Patentamt

European Patent Office

Office européen des brevets

(19)

(11) Publication number: **0 102 393**

**A1**

(12)

# EUROPEAN PATENT APPLICATION

published in accordance with Art. 158(3) EPC

(21) Application number: 82901619.5

(22) Date of filing: 28.05.82

Data of the international application taken as a basis:

(86) International application number:
PCT/JP82/00205

(87) International publication number:
WO82/04220 (09.12.82 82/29)

(51) Int. Cl.³: **B 29 D 3/02**

(30) Priority: 29.05.81 JP 82345/81

(43) Date of publication of application:
14.03.84 Bulletin 84/11

(84) Designated Contracting States:
FR

(71) Applicant: USUI, Fumio
441 Shimoasao Tama-ku
Kawasaki-shi Kanagawa 215(JP)

(72) Inventor: USUI, Fumio
441 Shimoasao Tama-ku
Kawasaki-shi Kanagawa 215(JP)

(74) Representative: Chauchard, Robert et al,
c/o Cabinet Malémont 42, avenue du Président Wilson
F-75116 Paris(FR)

(54) METHOD AND APPARATUS FOR MANUFACTURING HOLLOW ARTICLE.

(57) Method and apparatus for manufacturing a hollow fiber reinforced plastic article by improving the orientation and weaving of the wires used as reinforcing material, and continuously automating the series of forming steps using a simple process. This method includes the steps of continuously supplying a core (11) of prescribed shape along a predetermined route, inserting the core into a winding drum (22) and a winding disc (21) coaxially with the drum and disc so as to move relative to them, inserting a weft wire (20a) into a guide hole formed in the disc to rotate the disc in a first direction and moving the core in a predetermined direction to wind the weft wire onto the core while winding the weft wire onto the winding drum, rotating the disc in a second direction opposite to the first direction after winding in a predetermined quantity, and winding the weft wire onto the core by moving the core in the predetermined direction, supplying synthetic resin to the weft wire at the inlet or outlet side of the disc, hardening the synthetic resin layer formed on the core, and cutting the hollow article thus hardened and finishing the surface of the hollow article.

F I G. 14

0102393

TITLE MODIFIED

see front page

DESCRIPTION

(Title of the Invention)

Method and Apparatus for Producing Hollow Body

(Technical Field)

The present invention relates to a method and an apparatus for producing a hollow body.

(Background Art)

The term "hollow body" as used herein and in the appended claims is to be understood to mean any hollow cylindrical article with or without bottom, such as a pipe or a bomb. Materials used to produce the hollow body are mainly linear material and hardening composite material. The term "linear material" as used herein and in the appended claims is to be understood to mean any such materials as vegetable fiber, animal fiber, mineral fiber, synthetic fiber, metal wire, and the like. The term "hardening composite material" as used herein and in the appended claims is to be understood to mean any such materials as synthetic material, foaming material, synthetic rubber, and concrete material, which are used individually or in combination with each other.

In recent years, hollow bodies, such as pipes or bombs, are made of reinforced plastics (FRP). However, none of these products has yet been found entirely satisfactory in respect of strength and cost.

It was impossible to increase the strength because of problems in the orientation and weaving of the reinforcing fiber. That is, in the conventional method, it was difficult to dispose warps and wefts in a desired crossing angle and

0102393

there was a tendency that the threads bent at intersections of the warps and the wefts were easy to break.

It was impossible to reduce the cost because it was difficult to bring a series of molding steps into a continuous and automatic operation and because automatic equipment tended to be high in cost and large in size.

(Disclosure of the Invention)

Accordingly, an object of the present invention is to provide a method and an apparatus for producing a hollow body at a low cost and with high reliability by improvement of the orientation and weaving of the linear material as the reinforcing material and by continuous automation of a series of the molding steps with simple equipment.

A method for producing a hollow body according to the present invention comprises the steps of feeding continuously a winding core of a predetermined shape along a predetermined passage; inserting said winding core for movement coaxial with and relative to a winding drum and a winding disk; disposing a bobbin having a weft linear material wound therearound at a predetermined position; passing the weft linear material payed out from said bobbin through a guide hole provided in said winding disk and fixing it to an arbitrary position of said winding core; rotating said winding disk in a first direction while moving said winding core in a predetermined direction, thereby winding the weft linear material on said winding core while winding the weft linear material on said winding drum; binding, after a predetermined quantity of the linear material has been wound, the terminal end of the winding of the weft linear material on said winding core to fix it thereon; rotating, after said binding and fixing, said winding disk in a second direction which is opposite to said first direction while moving said winding core in a predetermined direction, thereby winding the weft linear material on said winding core while unwinding and rewinding the winding on the outer peripheral surface of said winding drum; binding, after a predetermined quantity of the linear material has been wound, the terminal end of the winding of the weft linear material on said winding core to fix it thereon; repeating the winding and the binding and fixing of the weft linear material on said winding core predetermined times; supplying a synthetic resin to said weft linear material or to the winding on the entrance side or on the exit side of said winding disk; hardening the synthetic resin layer formed on said winding core; and, cutting the hardened and formed hollow body into a predetermined size and finishing the external shape thereof.

Another method according to the present invention comprises the steps of, after repeating the winding and the binding of the weft linear material on said winding core predetermined times, supplying a synthetic resin to said weft linear material or to the winding on the entrance side or on the exit side of said winding disk; supplying an intermediate material about the synthetic resin layer formed on said winding core; performing said winding and said supplying of the synthetic resin about said intermediate material layer; hardening said synthetic resin layer and said intermediate material layer; and, cutting the hardened and formed hollow body into a predetermined size and finishing the external shape thereof.

An apparatus for producing a hollow body according to the present invention comprises a winding core feeder for feeding continuously a winding core of a predetermined shape along a predetermined passage; a bobbin disposed at a predetermined position and wound therearound with a weft linear material; a winding disk supported coaxially and relatively movably with said winding core and having at least one guide hole; a driving mechanism for rotating said winding disk alternately in opposite directions with a predetermined period and at a predetermined speed; a winding drum disposed upstream of and adjacent to said winding disk with respect to the direction of movement of said winding core and supported coaxially and relatively movably with said winding core; a binder disposed downstream of and adjacent to said winding disk with respect to the direction of movement of said winding core, for binding and fixing the outer periphery of said winding core with a predetermined period; a synthetic resin feeder disposed on the entrance or the exit side of said winding disk, for feeding a synthetic resin to said weft linear material or to

- 4 -

0102393

the winding; a means for hardening the synthetic resin layer formed on said winding core; and, a means for cutting the hardened and formed hollow body into a predetermined size and finishing the external shape thereof.

Another apparatus according to the present invention comprises a synthetic resin feeder disposed on the entrance or the exit side of said winding disk, for feeding a synthetic resin to said weft linear material or to the winding; an intermediate material feeder for feeding an intermediate material about the synthetic resin layer formed on said winding core; a means for hardening the synthetic resin layer and the intermediate material layer formed on said winding core; and, a means for cutting the hardened and formed hollow body into a predetermined size and finishing the external shape thereof.

(Brief Description of the Drawings)

Figs. 1A to 1F are sectional views of products which are subject of the present invention;

Fig. 2 is a process chart of a first method according to the present invention;

Fig. 3 is a process chart of a second method according to the present invention;

Fig. 4 is a schematic illustration of a core feeding system;

Fig. 5 is a schematic illustration of a system for continuously forming a core material of a straight pipe;

Fig. 6 is a schematic illustration of a system for continuously forming a core material of a varied diameter pipe;

Fig. 7 is a sectional view of an elastic tubular body which is an embodiment of the winding core used in the method according to the present invention;

Fig. 8 is a schematic illustration of a system for feeding the elastic tubular bodies;

Fig. 9 is a schematic illustration of winding operation using the elastic tubular bodies;

Fig. 10 is a schematic illustration of winding process;

Figs. 11A to 11C are sectional views showing relationships between the winding disk and the winding drum;

Figs. 12A and 12B are schematic illustrations of embodiments in which a plurality of winders are arranged in series;

Figs. 13A and 13B are schematic illustrations of examples of arrangement of the warp linear material feeders;

Fig. 14 is a schematic illustration of the principle of synthetic resin feeding process;

Figs. 15 to 17 are sectional views of embodiments of a synthetic resin feeder;

Fig. 18 is a front view seen from the line XVIII - XVIII of Fig. 17;

Fig. 19 is a schematic illustration of an example of intermediate material feeding process;

Fig. 20 is a schematic illustration of an example of the apparatus for carrying out the first method shown in Fig. 2;

Fig. 21 is a perspective view of the winder;

Fig. 22 is a sectional view of an embodiment of the winder;

Fig. 23 is an elevation seen from the line XXIII - XXIII of Fig. 22;

Fig. 24 is a view similar to Fig. 22, showing another embodiment;

Fig. 25 is an elevation seen from the line XXV - XXV of Fig. 24;

Fig. 26 is a view similar to Fig. 22, showing a further embodiment;

Fig. 27 is a view similar to Fig. 22, showing a still further embodiment;

Figs. 28 and 29 are perspective views of further embodiments of the winding disk and the winding drum; and

Fig. 30 is a side view of a linear material guide mechanism.

(Best Mode for Carrying out the Invention)

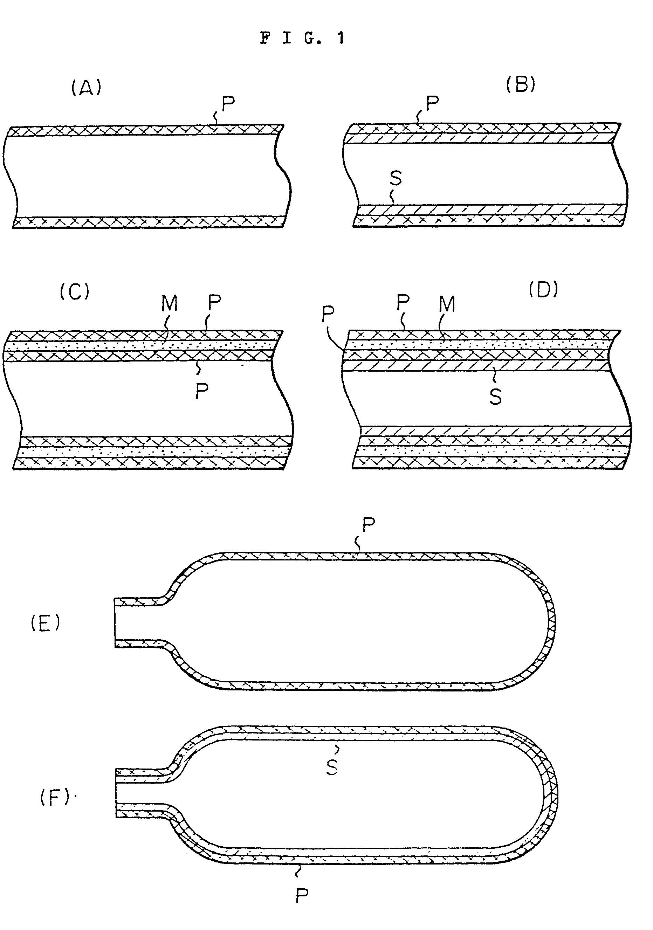

Before describing the method and the apparatus according to the present invention, products which are subjects of the present invention will first be explained with reference to Fig. 1. Hollow bodies to which the present invention is applied are divided roughly into two groups, that is hollow bodies without bottom (A) - (D) such as pipes and hollow bodies with bottom (E) and (F) such as bombs. These hollow bodies are subdivided according to their constructing materials and presence of core material, as shown in Table 1.

Table 1

| | Bottom | Constructing Material | Core Material** | Fig. 1 |
|---|---|---|---|---|
| Hollow Bodies | Absent (Pipes) | Reinforced Synthetic Resin | Absent | (A) |
| | | | Present | (B) |
| | | Composite* Reinforced Synthetic Resin | Absent | (C) |
| | | | Present | (D) |
| | Present (Bombs) | Reinforced Synthetic Resin | Absent | (E) |
| | | | Present | (F) |

\* "Composite" means that a hardened composite material (here-inafter called intermediate material) is interposed as an intermediate material layer M between reinforced synthetic resin layers P.

\*\* "Core material" denotes a material which serves as a winding core during preforming and is then left in the product as a portion S of the constructing material thereof.

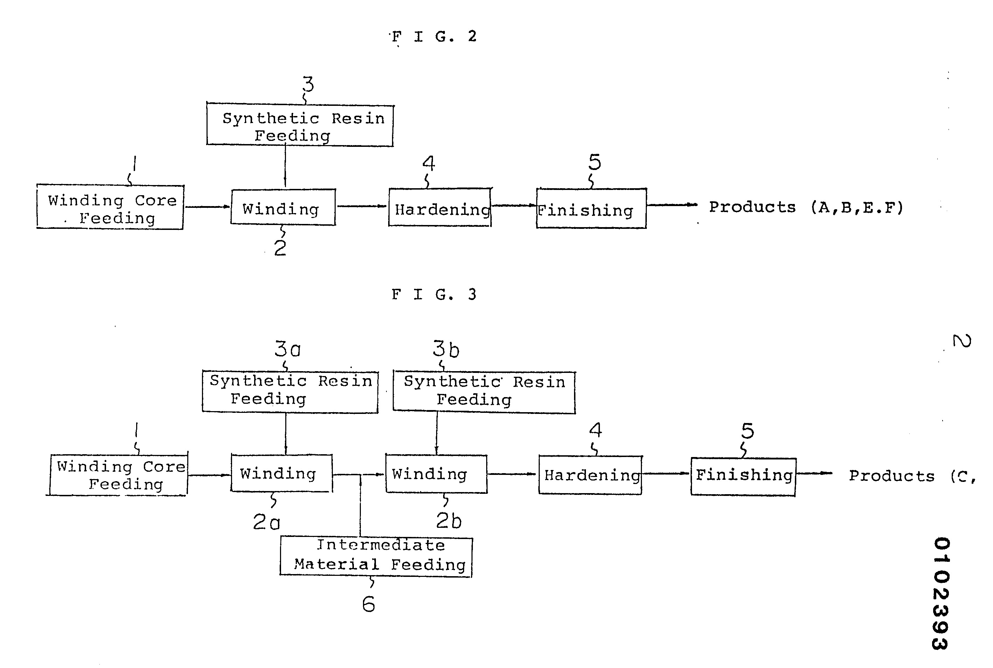

The principle of the method according to the present invention will now be described with reference to Figs. 2 and 3.

The first method shown in Fig. 2 is intended to be applied to the products (A), (B), (E) and (F) shown in Fig. 1 and Table 1. The first method comprises winding core feeding step 1, winding step 2, synthetic resin feeding step 3, hardening step 4, and finishing step 5.

The second method shown in Fig. 3 is intended to be applied to the products (C) and (D) shown in Fig. 1 and Table 1. The second method comprises winding core feeding step 1, first winding step 2a, first synthetic resin feeding step 3a, intermediate material feeding step 6, second winding step 2b, second synthetic resin feeding step 3b, hardening step 4, and finishing step 5.

The winding core feeding step 1 is a step for continuously feeding the winding core for winding in the next step. A core bar, an elastic tubular body, or a core material may be used as the winding core. The sectional shape of the winding core is not limited to a circle but may be any suitable shape such as an ellipse, a polygon, or the like. Further, the longitudinal sectional shape of the winding core may take any suitable shape such as a rectangle, a trapezoid, a circle, an ellipse, or the like.

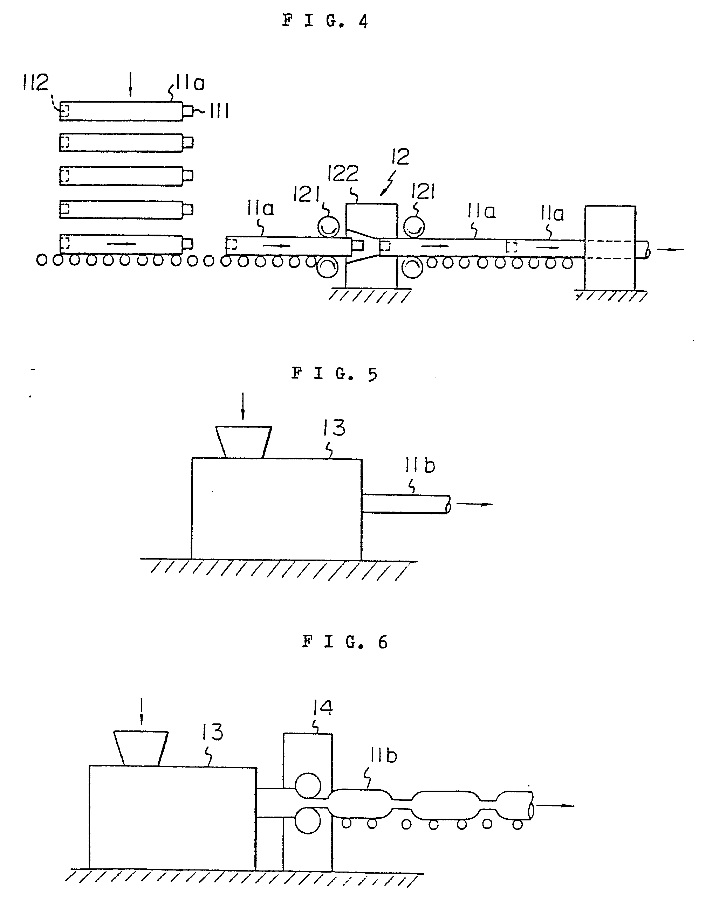

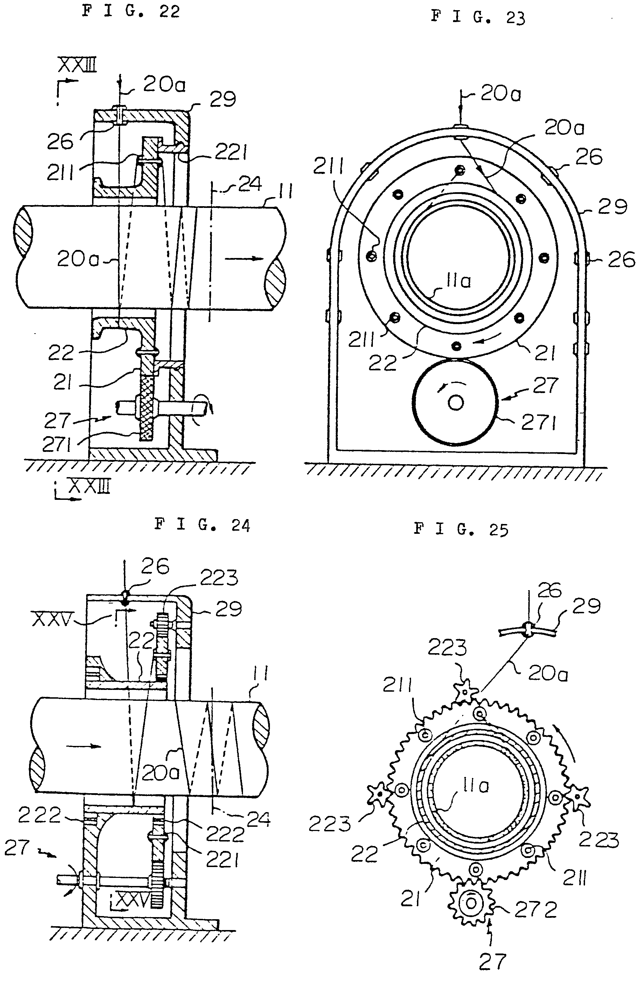

An example in which a core bar is used as the winding core is shown in Fig. 4. A number of core bars 11a of substantially the same size are prepared, each of which is provided with a projection 111 at an end and a depression 112 at the other end so as to be connected longitudinally with other core bars. The core bars 11a are continuously fed longitudinally thereof, sequentially connected by a conventional connecting machine 12 comprising pinch rollers 121 and a guide 122, and then continuously fed into a winder 200 (Fig. 21) of the next step to be described hereinunder.

The core bar feeding system described above is suitable for producing the products (A), (C) and (E) shown in Fig. 1 and Table 1.

An example in which a core material is used as the winding core is shown in Figs. 5 and 6. A core material 11b is continuously formed by extruding a synthetic resin material through a conventional extrusion molding machine 13. Fig. 5 shows a system for producing a straight tube. The core material feeding system shown in Fig. 5 is suitable for producing the products (B) and (D) shown in Fig. 1 and Table 1. Fig. 6 shows a system incorporating a processing machine 14 on the exit side of the extrusion molding machine 13, for producing a bomb-like continuous varied-diameter tube. The core material feeding system shown in Fig. 6 is suitable for producing the product (F) shown in Fig. 1 and Table 1.

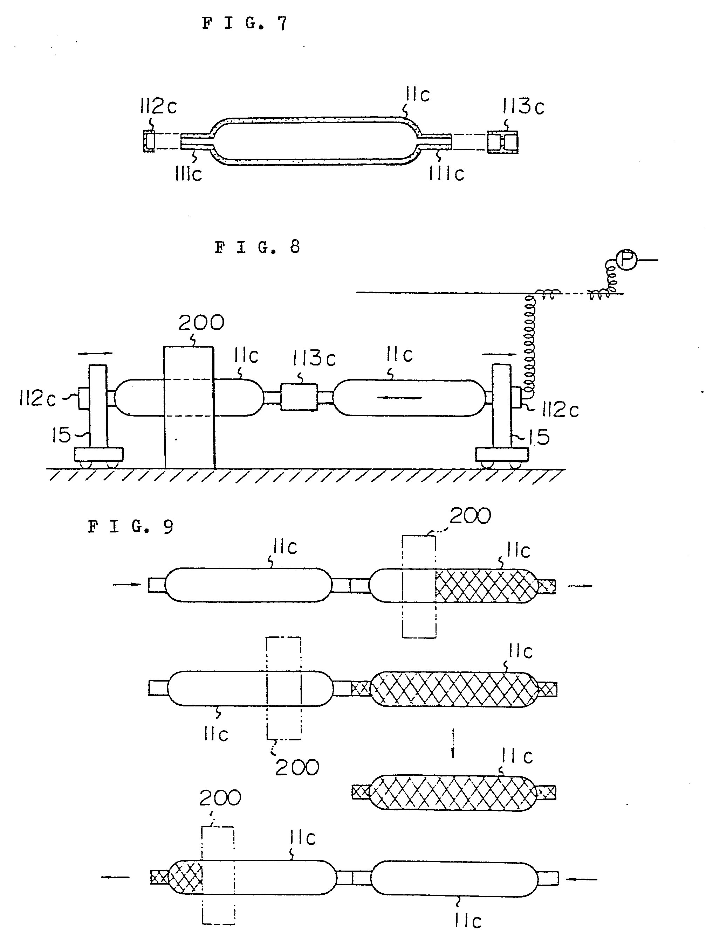

While we have described the method according to the present invention with respect to the system for sequentially or continuously feeding the winding core in one direction, the method according to the present invention may take the feeding system in which the winding core is sequentially or continuously moved. For example, in production of a hollow body with bottom but without core material such as a bomb as shown in Fig. 1(E) and Table 1, an elastic tubular body 11c as

shown in Fig. 7 is used as the winding core in the winding core feeding system as shown in Fig. 8.

The elastic tubular body 11c is provided, as shown in Fig. 7, at both ends thereof with smaller diameter portions 111c and, further, at an end with a closing plug 112c and at the other end with a connecting pipe 113c. The elastic tubular body 11c is made of an elastic material such as rubber and preferably embedded longitudinally therein with metal wires or the like as reinforcing material. By such construction, the elastic tubular body 11c is relatively rigid in the longitudinal direction while flexible and elastic in the circumferential direction.

In feeding the winding core, as shown in Fig. 8, two elastic tubular bodies 11c are connected in series by means of a connecting pipe 113c, the connected elastic tubular bodies 11c are supported at both ends by trucks 15 and supplied thereinto with pressurized air from an end. By the pressurized air, the elastic tubular body 11c is enabled to maintain itself in a predetermined shape and added with rigidity in the longitudinal direction. The trucks 15 are moved reciprocatably within a predetermined distance at a predetermined speed.

While passing through the winder 200 to be described hereinunder, the elastic tubular body 11c is wound on the outer periphery thereof with a linear material. An example of the winding system is shown in Fig. 9, in which when one of the two connected elastic tubular bodies 11c has been completely wound thereabout with the linear material, it is replaced by a new elastic tubular body 11c and then the remainder of the two connected elastic tubular bodies 11c is wound thereon with the linear material. These operations are performed alternately.

After a hollow body is formed on the elastic tubular body, the elastic tubular body can be easily separated from the hollow body formed thereon by exhausting the air from it and pulling it from the formed hollow body.

Processing of the opening and the bottom of the formed hollow body is performed in the finishing step 5 to be described hereinunder. In a hollow body with bottom, such as a bomb, it is advantageous to perform the finishing step before the formed hollow body has been completely hardened. For example, the opening of the formed hollow body may be provided with screw thread by conventional dies. In the bottom of the formed hollow body, the protrusion is first constricted, then the excess material is removed, and lastly the bottom is shaped smooth by any suitable means such as a conventional press.

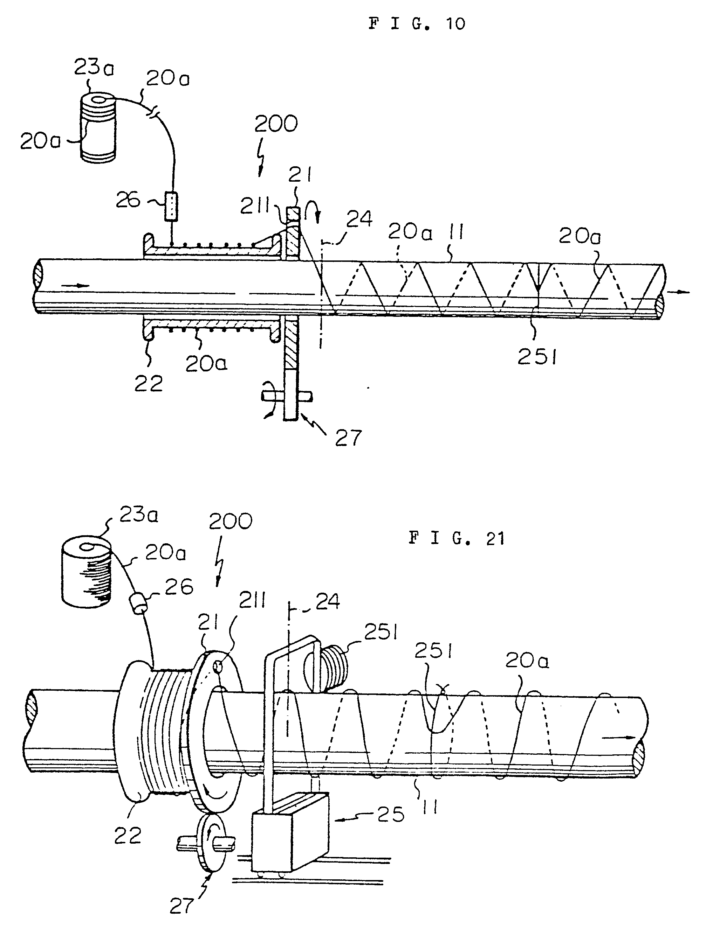

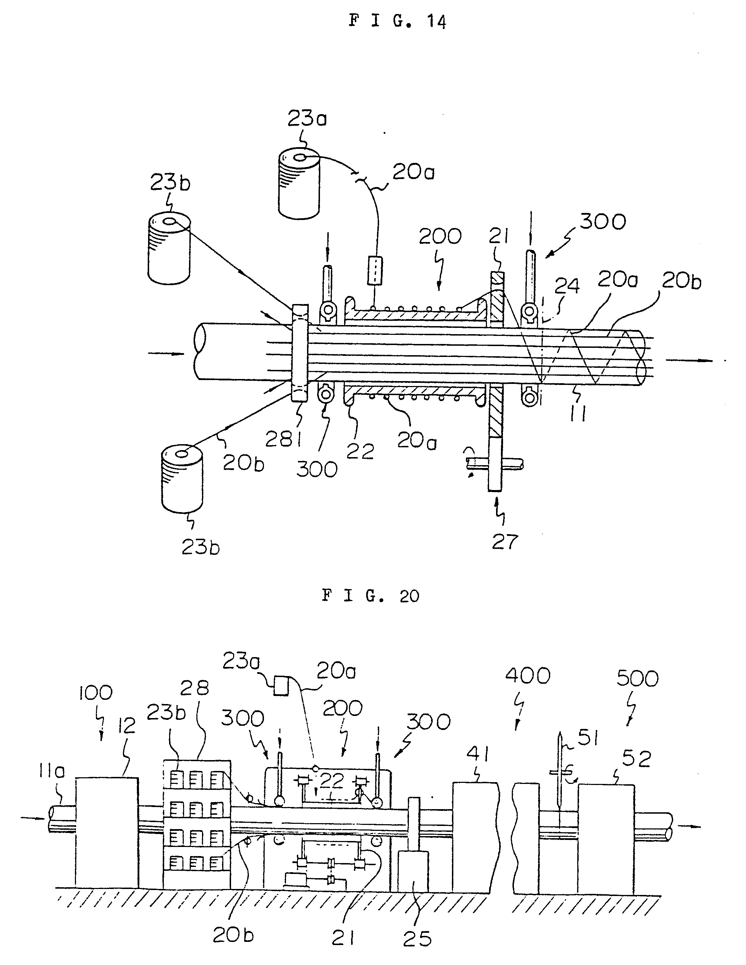

Referring now to Fig. 10, the principle of the winding step 2 will be described. Along with the winding step 2, the synthetic resin feeding step 3 is performed. For convenience of explanation, however, only the winding step will be described here, and the synthetic resin feeding step 3 will be described in detail hereinunder with reference to Figs. 14 to 18.

A winding core 11 is inserted coaxially through a winding disk 21 and a winding drum 22, and supported free from contact therewith. The winding core 11 is movable axially thereof and the winding disk 21 is rotatable about the axis of the winding core 11. The winding disk 21 is provided with at least one guide hole 211 on the outer periphery thereof. A bobbin 23a having a weft linear material 20a wound therearound is located at a predetermined position. A binding position 24 is established at a position downstream of and adjacent to the winding disk 21 with respect to the direction of movement of the winding core 11.

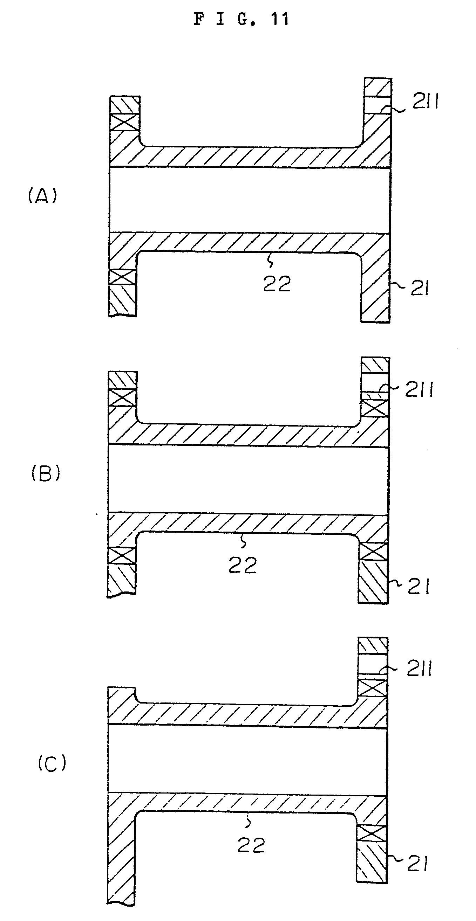

The relationship between the winding disk 21 and the winding drum 22 is as shown in Figs. 11A to 11C, that is, the winding disk 21 and the winding drum 22 may take any of the three different constructions in which they are formed integrally (Fig. 11A), they are connected rotatably relative to each other (Fig. 11B), and the winding drum 22 is fixed while the winding disk 21 is supported rotatably therewith (Fig. 11C). The winding drum 22 is positioned upstream of and adjacent to the winding disk 21 with respect to the direction of movement of the winding core 11.

At the binding position 24, a binding linear material 251 is wound around the outer peripheral surface of the winding core 11 using a binder 25 (Fig. 21) to be described hereinunder. The linear material 251 used for binding is preferably of the equal quality to the weft linear material 20a. The object of the binding and fixing is to prevent unwinding of the terminal end of the linear material 20a wound on the winding core 11 when the winding disk 21 is reversed in rotation as will be described hereinunder. Accordingly, any other material such as tape, ring, or clip may be used in place of the linear material 251.

After the preliminary stage has been finished in the manner described above, the weft linear material 20a is pulled out from the bobbin 23a, passed through a suitable guide 26, wound on the outer periphery of the winding drum 22 suitable times, passed through the guide hole 211 of the winding disk 21, and fixed at the leading end thereof to a suitable position on the outer peripheral surface of the winding core 11. Thereafter, the winding disk 21 is rotated in the predetermined direction by a drive mechanism 27 while the winding core 11 is moved axially in the predetermined direction (for example, to the right in Fig. 10).

When the winding disk 21 is rotated in either direction in the state described above, the linear material 20a is wound on both of the winding drum 22 and the winding core 11. That is, as shown schematically in Fig. 10, the weft linear material 20a is firstly wound on the winding drum 22, slides thereon, passes through the guide hole 211 of the winding disk 21, and is wound on the winding core 11. The number of turns of the linear material 20a wound on the winding drum 22 is the same as the number of turns of the linear material wound on the winding core 11 except the number of turns thereof initially wound on the winding drum 22.

The winding pitch of the weft linear material 20 on the winding core 11 can be changed by controlling the speed of movement of the winding core 11 or the speed of rotation of the winding disk 21. In this manner, the linear material 20a can be wound on the winding core 11 in a rough pitch and on the winding drum 22 in a tight pitch.

When a predetermined quantity of the weft linear material 20a has been wound on the winding core 11 or on the winding drum 22, the terminal end of the winding on the winding core 11 is bound and fixed by another linear material such as 251 using the binder 25 at the binding position 24 so as to keep
the terminal end of the winding from being unwound off the
winding core 11.

After the binding and fixing of the weft linear material
20a, the winding disk 21 is rotated in the direction reverse to
that in the preceding occasion.  In the first half of the
reverse rotation of the winding disk 21, the linear material,
while being unwound from the winding on the winding drum 22,
is wound on the winding core 11 in the direction reverse to
that in the preceding occasion.  In the second half of the
reverse rotation of the winding disk 21, that is, after the
winding of the linear material has been unwound out from the
winding drum 22, the weft linear material 20a, while being
wound on the winding drum 22 in the direction reverse to that
in the preceding occasion, is continuously wound on the winding
core 11.

When a predetermined quantity of the weft linear material
20a has been wound on the winding core 11 or on the winding
drum 22, the binding and fixing of the linear material is
performed as in the preceding occasion.

By repeating sequentially the steps described above,
the winding operation shown schematically in Fig. 10 is performed.

The reverse rotation of the winding disk 21 is performed
preferably in synchronism with the binding and fixing operation.
For carrying out the binding and fixing operation smoothly,
the movement of the winding core 11 may be temporarily stopped
during the binding and fixing operation, or the binding position
24 may be shifted within a predetermined range in time with
the speed of movement of the winding core 11.

In the winding process of the weft linear material 20a,
as described above, since the weft linear material 20a slides
on the winding drum 22, it is preferred that the winding drum
22 is plated, attached thereon with a low-frictional material,
or provided with idle rollers on the outer surface thereof for
smooth sliding of the weft linear material thereon.

As explained with reference to Fig. 11, there are three
different types of combination between the winding disk 21 and
the winding drum 22.  There is no large difference in effect among these types of combination. In the integral construction between the disk 21 and the drum 22 (Fig. 11A), the winding operation of the weft linear material is carried out smoothly because the winding of the weft linear material is formed from the side opposite to the disk 21. In the construction in which the disk 21 and the drum 22 are relatively rotatable (Fig. 11B), it is possible to apply a brake to the drum 22 during the reverse rotation of the disk 21 to thereby prevent the winding from becoming loose. In the construction in which the winding drum 22 is fixed (Fig. 11C), winding and unwinding of the winding can be carried out smoothly during the reverse rotation because the winding of the weft linear material is formed from the side of the winding disk 21.

By providing the winding disk 21 with a plurality of guide holes 211, it is made possible to wind a plurality of pieces of the weft linear materials 20a simultaneously on the winding core 11.

The winder 200 will be described in detail hereinunder with reference to Figs. 22 to 30.

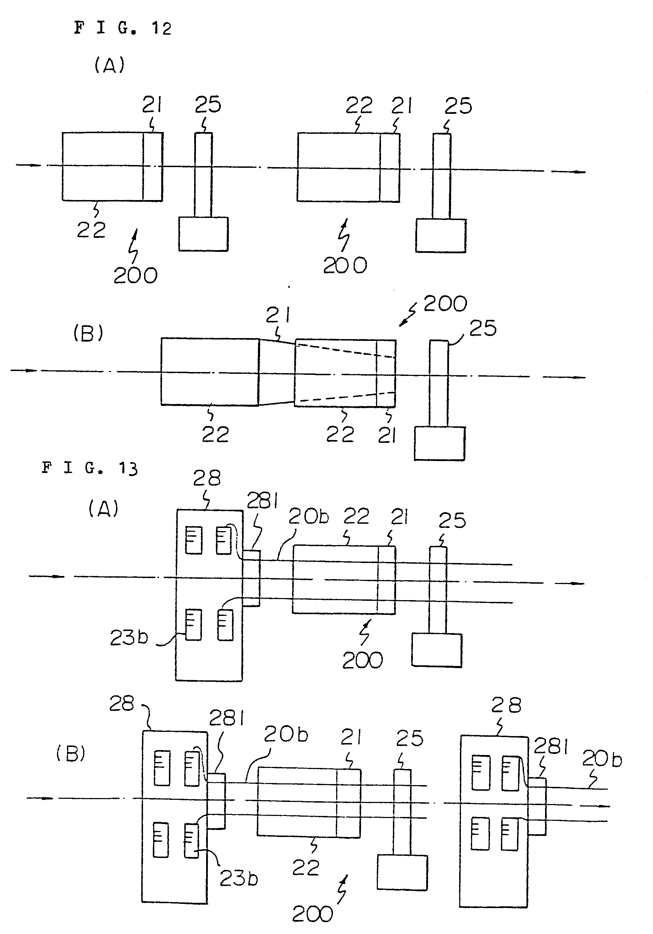

The winding step 2 has been described hereinabove with reference to the case in which only one winder 200 is used. However, a plurality of sets of winders 200 may be provided in series as shown in Fig. 12A or only one binder 25 may be provided at the rearmost position so as to be commonly used with a plurality of the winders 200 as shown in Fig. 12B.

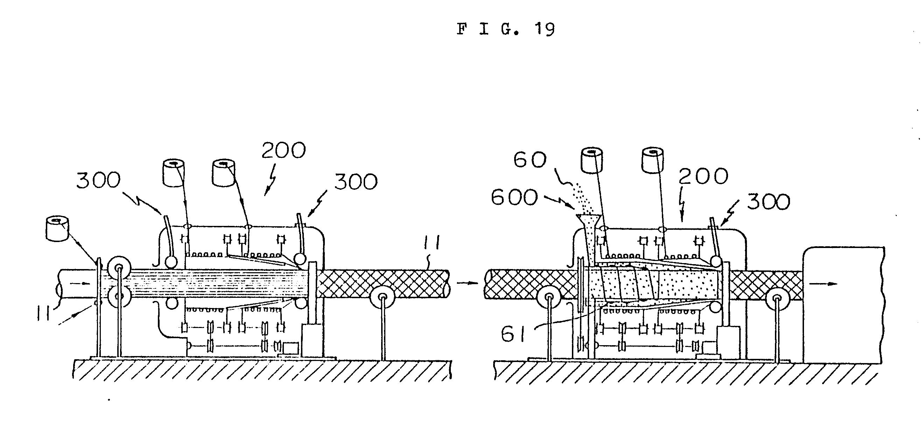

In the construction of Fig. 12B, in order to concentrate winding positions for the winding core to thereby ensure the binding and fixing of the winding, the winding disk 21 is preferably elongated axially into within the winding disk 21 on the upstream side (Fig. 19).

In this way, by providing a plurality of winders 200 in series, it is made possible to wind a plurality of layers of weft linear material 20a on the winding core.

In addition to the weft linear material, when necessary, warp linear materials may be used. A warp linear material feeder may be of a conventional construction for feeding warp linear materials on the outer peripheral surface of the winding core along the longitudinal direction thereof. For example, as shown in Figs. 13A and 13B, a warp linear material feeder 28 may be of the construction in which a number of bobbins 23b are disposed on a stand, and a warp linear material 20b payed out from each of the bobbins is directed longitudinally through an annular guide 281.

Figs. 13A and 13B show examples of arrangement of the warp linear material feeder 28. That is, only one warp linear material feeder 28 may be used and disposed on either of entrance or exit side of the winder 200 (Fig. 13A), or two warp linear material feeders 28 may be used and disposed one in each of entrance and exit sides of the winder 200 (Fig. 13B).

The synthetic resin feeding step 3 will now be described. The synthetic resin feeding step 3 is carried out in association with the winding step 2 described above, to form a layer of the synthetic resin including the linear materials on the outer periphery of the winding core. This step 3 is shown concretely in Fig. 14.

As shown in Fig. 14, a synthetic resin feeder 300 is disposed on the entrance side or on the exit side or on both sides of the winder 200 and has the construction to surround the outer peripheral surface of the cylindrically formed body of the warp linear materials 20b or of the warp linear materials 20b and the weft linear materials 20a.

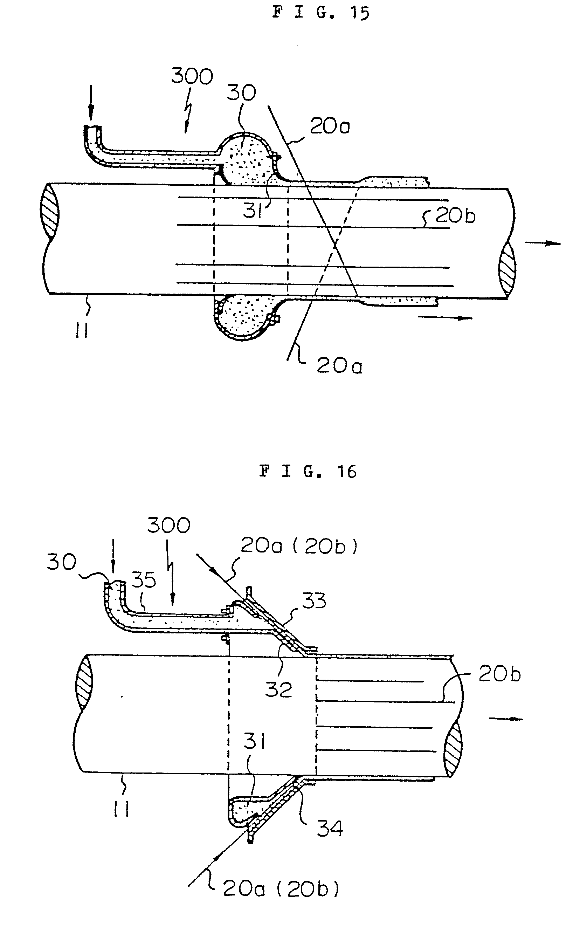

The synthetic resin feeder 300 may take any of the construction, as shown in Fig. 15, in which a nozzle 31 is in direct contact with the outer peripheral surface of the cylindrically formed body to supply a synthetic resin thereto or the construction, as shown in Fig. 16, in which the nozzle 31 is slightly spaced from the outer peripheral surface of the cylindrically formed body, and the warp linear materials 20b or the weft linear materials 20a are guided to the vicinity of the nozzle 31 so as to supply the synthetic resin directly to the warp linear materials 20b or the weft linear materials 20a.

In the construction of the synthetic resin feeder 300 shown in Fig. 16, a frustoconical body 32 has a frustoconical cover 33 having a substantially identical form thereto and disposed on the outer surface thereof leaving a predetermined clearance 34 between the body 32 and the cover 33. The synthetic resin 30 is supplied to the body 32 through a conduit 35 and squeezed out of the nozzle 31 into the clearance 34. The linear material 20a or 20b is directed from the large diametrical outer peripheral portion of the clearance 34 and led with the synthetic resin out of the small diametrical outer peripheral portion of the clearance 34.

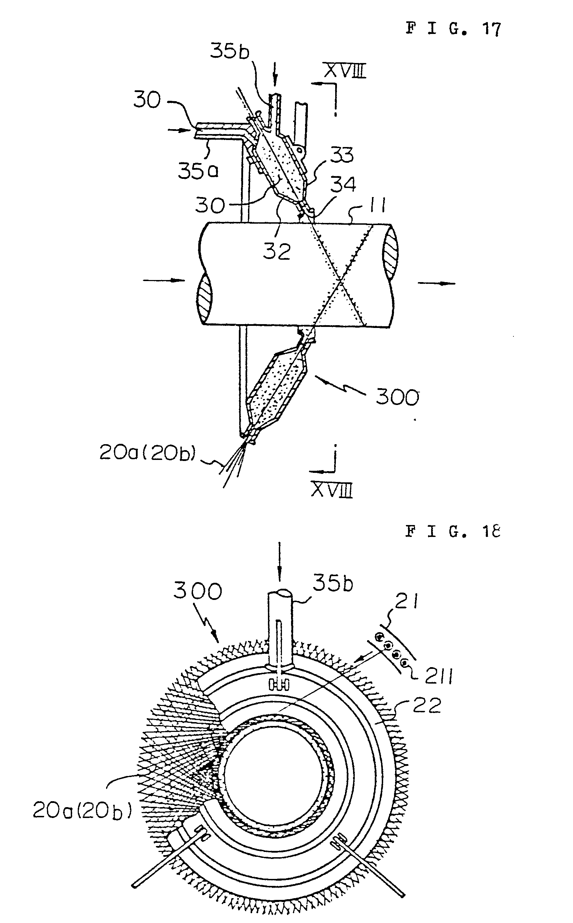

Fig. 17 shows a modification of the synthetic resin feeder 300 of Fig. 16, and Fig. 18 is a front view taken from the line XVIII - XVIII of Fig. 17. In this modification, the frustoconical body 32 and the frustoconical cover 33 are provided with separate conduits 35a and 35b, respectively. By providing the two separate conduits 35a and 35b, it is made possible to facilitate the supply of the synthetic resin and to mix different kinds of the synthetic resin within the clearance 34.

The synthetic resin is preferably a thermoplastic resin.

Now, the intermediate material feeding step 6 will be described. This step is for forming the intermediate material layer M consisting of the hardened composite material disposed between the reinforced synthetic resin layers P as shown in Figs. 1C and 1D. The intermediate material layer M·is provided for the purpose of reinforcement, heat resistance, heat insulation, or corrosion resistance. The intermediate material is selected from among the hardened composite materials according to the purpose of the use.

The synthetic resin feeder 300 described above, when the intermediate material in place of the synthetic resin is supplied thereto, functions as an intermediate material feeder. For example, as shown in Fig. 19, the winding core 11 is formed thereon with the reinforced synthetic resin layer P by the winder 200 and the synthetic resin feeder 300, and then fed to the next winder 200, in which, before winding, an intermediate material 60 is supplied by an intermediate material feeder 600 to around the reinforced synthetic resin layer P to form the intermediate material layer M which is further formed therearound with the reinforced synthetic resin layer P by the winder 200 and the synthetic resin feeder 300.

The intermediate material feeder 600 is preferably provided with a conventional screw conveyor 61 for uniform distribution of the intermediate material 60.

In the hardening step 4, the synthetic resin and the intermediate material formed around the winding core 11 as described above is hardened. In this step, an unhardened cylindrically formed body is put on a table and left in the air or charged into a heating furnace to be hardened into the cylindrically formed body.

Lastly, in the finishing step 5, the hardened cylindrical body is cut to the predetermined size and, if necessary, the winding core is removed therefrom, and then the cylindrically formed body is finished in shape. In the case of a hollow body with bottom, such as a bomb, thread cutting in the opening and flattening or concaving of the bottom may be performed by means of a conventional press or dies before the hardening step.

As will be described hereinunder, since the same piece of the weft linear material 20 is oriented in the same direction between the binding linear materials 251 and since the cylindrical body can be so formed that the length of the weft linear material thereof is in the range of 10-20m, the troubles such as different orientation of the weft linear material, local bulging in the binding linear material position, and removal of other binding and fixing member are eliminated by cutting the cylindrically formed body in the vicinity of each binding linear materials 251.

A schematic construction of an apparatus for carrying out the first method accoridng to the present invention is shown in Fig. 20. The present apparatus comprises a winding core feeder 100, the winder 200, the synthetic resin feeder 300, a hardening device 400, and a finishing device 500.

In an embodiment of the present apparatus, the winding core feeder 100 connects the core bars 11a with each other sequentially by means of the connecting machine 12 thereof and feeds the connected winding core to the winder 200. The winder 200 comprises the winding disk 21 and the winding drum 22 for winding the weft linear material 20a on the core bar 11a, the warp linear material feeder 28 for arranging the warp linear materials 20b longitudinally around the core bar 11a, and the binder 25. The synthetic resin feeder 300 is disposed on each of the entrance side and the exit side of the winder 200. The hardening device 400 comprises a heating furnace 41. The finishing device 500 comprises a cutter 51 and a separator 52. The separator 52 has the similar mechanism to the connector 12 and the functions for separating the previously connected core bars 11a and for removing the core bar 11a from the formed hollow body.

The winder 200 only of the present apparatus will now be described in detail hereunder because other components of the present apparatus have already been described hereinabove or conventional devices are used as such. The winder 200 shown in Fig. 21 corresponds to that shown in Fig. 10. In Fig. 21, the binder 25 is disposed at the binding and fixing position 24. The winding disk 21 is rotated by the drive means 27 at a predetermined speed and reverses alternately the direction of rotation with a predetermined period.

The binder 25 is satisfactory if it has the function to wind the linear material 251 on the outer peripheral surface of the winding core 11 once or twice and bind it. As the binder having such function, a commercially available automatic packing machine may be utilized. Since such automatic packing machine is capable of operating at a high speed requiring only 2-5 seconds for one cycle of operation, it causes no particular hindrance to the binding operation during the ordinary winding operation. In order to make the binding securer, however, it is preferable to stop the winding core 11 temporarily only during the binding operation or to move the binder 25 over a predetermined distance in synchronism with the winding core 11.

The actual length of the weft linear material 20a wound helically in the same direction, that is the actual length thereof between the binding linear materials 251, is dependent upon the diameter and the number of pieces of the weft linear materials 20a supplied, the diameter and the number of rotation of the winding drum 22, and the diameter and the feed speed of the winding core 11, but may be determined to the range from 10m to 15m at largest. Accordingly, the product according to the present invention can be used without any hindrance in producing common hollow bodies.

The winding disk 21 and the winding drum 22 may be constructed in any of the relationships shown in Figs. 11A to 11C, the concrete construction will be described in detail below.

The embodiment shown in Figs. 22 and 23 corresponds to the construction shown in Fig. 11A. That is, the winding disk 21 and the winding drum 22 are formed integrally with each other and supported rotatably with respect to a support frame 29 by a slide ring 221. The winding core 11 is inserted through the central holes of the winding disk 21 and the winding drum 22 and is supported against contact therewith. A disk 271 of the drive mechanism 27 is in frictional contact with the outer peripheral surface of the winding disk 21.

The weft linear material 20a passes through any one of a plurality of the guides 26 provided in the support frame 29, turns around the outer peripheral surface of the winding drum 22, passes through the guide hole 211 provided in the winding disk 21, and is fixed in the leading end thereof to an arbitrary position on the winding core 11.

The winding operation in this embodiment is the same as that described above in relation to Fig. 10.

The embodiment shown in Figs. 24 and 25 corresponds to the construction of Fig. 11B. The winding disk 21 and the winding drum 22 are connected relatively rotatably through conventional roller bearings 222. The winding drum 22 is supported rotatably with respect to the support frame 29 through the roller bearings 222. The winding disk 21 is serrated on the outer periphery thereof for engagement with idle gears 223 and a driving gear 272 of the drive mechanism 27. The winding disk 21 is supported by the idle gears 223 rotatably at a predetermined position and is rotatably driven by the driving gear 272.

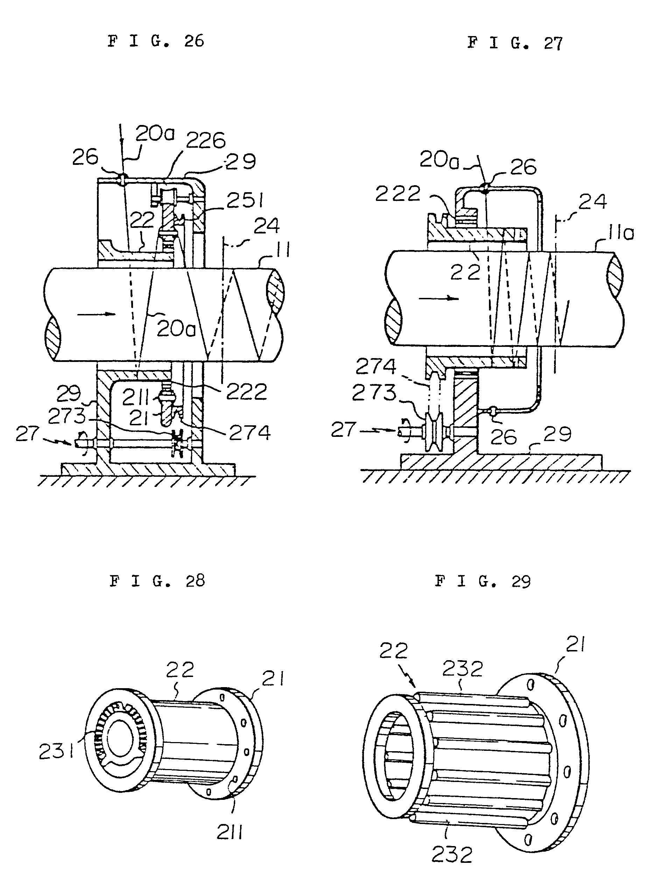

The embodiment shown in Fig. 26 corresponds to the construction of Fig. 11C. The winding drum 22 is supported fixedly by the support frame 29. The winding disk 21 is connected rotatably with respect to the winding drum 22 through the roller bearings 222. A pulley 225 is fixed to the side of the winding disk 21 and is connected to a driving pulley 273
of the driving mechanism 27 through a belt 274. The winding
disk 21 is supported rotatably at a predetermined position by
a roller 226 and is rotatably driven by the driving pulley 273.

The system for rotatably driving the winding disk 21
is not specifically limited to the embodiments described above
but may be interchangeable as required.

In the case where the winding disk 21 and the winding
drum 22 are formed integrally with each other, the guide hole
211 may be provided directly at the forward end of the winding
drum 22 as shown in Fig. 27, without forming the winding disk
21 specifically. By this construction, the winding angle of
the winding on the winding core 11 can be reduced. This
construction provides satisfactory effects particularly when
disposed on the upstream side of a plurality of the winders
as shown in Fig. 12B or 19.

The winding sometimes becomes loose during reverse rotation of the winding disk 21. An example of the mechanism for
preventing loosening of the winding is shown in Fig. 28. In
this mechanism, the winding disk 21 and the winding drum 22
are connected relatively rotatably, and a pair of coil springs
231 are interposed between them so that a reaction force is
transmitted to the winding drum 22 through the springs 231
during the reverse rotation of the winding disk 21.

For smooth relative sliding between the winding drum 22
and the winding thereon, it is effective to attach rollers 232
rotatably along the outer peripheral surface of the winding
drum 22 as shown in Fig. 29.

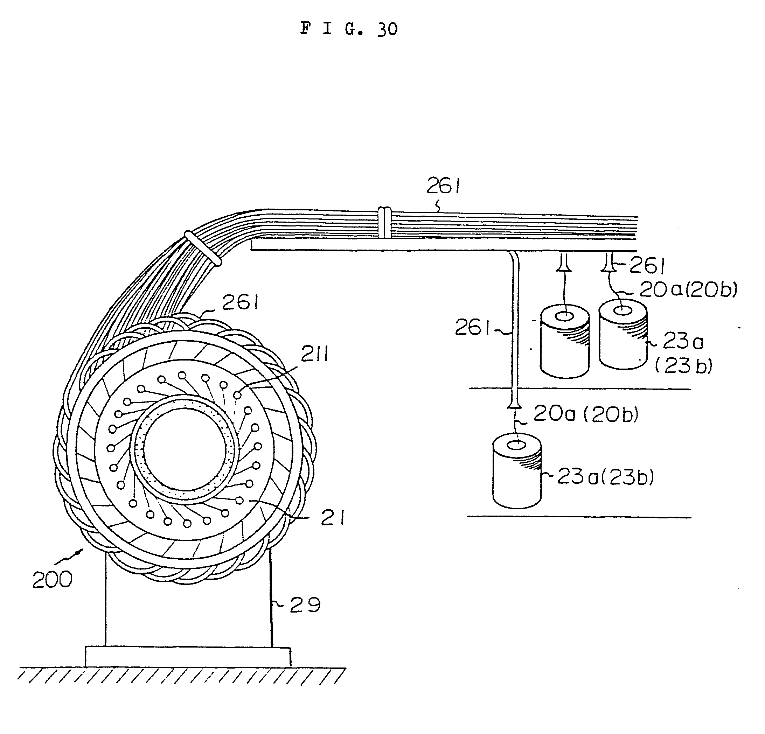

A linear material guide mechanism is shown in Fig. 30.
A characteristic feature of the present invention resides in
that the rotating elements can be formed light in weight and
small in size, thereby making it possible to wind a number of
pieces of the weft linear materials simultaneously around the
winding core 11. In this case, as shown in Fig. 30, the bobbins
23a having the weft linear materials 20a wound therearound are
arranged together at one place and the weft linear materials
20a payed out from the bobbins 23a are directed through respective guide pipes 261 to the respective guides 26 provided in the supported frame 29. By this arrangement, it is made possible to make efficient use of the limited space and to guide a number of the weft linear materials surely and without confusion. The similar construction may be applied to guide the warp linear materials.

According to the present invention, mechanical strength of the compound is considerably increased because the linear materials are not woven, and production cost is reduced by approximately 40% as compared with the conventional method by continuation and automation of the steps.

(Industrial Applicability)

The method and the apparatus according to the present invention achieve the most noticeable effects when applied particularly to a continuous production line of reinforced synthetic resin articles.

(Claims)

1.     A method for producing a hollow body, comprising the steps of:

feeding continuously a winding core of a predetermined shape along a predetermined passage;

inserting said winding core for movement coaxial with and relative to a winding drum and a winding disk;

disposing a bobbin having a weft linear material wound therearound at a predetermined position;

passing the weft linear material payed out from said bobbin through a guide hole provided in said winding disk and fixing it to an arbitrary position of said winding core;

rotating said winding disk in a first direction while moving said winding core in a predetermined direction, thereby winding the weft linear material on said winding core while winding the weft linear material on said winding drum;

binding, after a predetermined quantity of the linear material has been wound, the terminal end of the winding of the weft linear material on said winding core to fix it thereon;

rotating, after said binding and fixing, said winding disk in a second direction which is opposite to said first direction while moving said winding core in a predetermined direction, thereby winding the weft linear material on said winding core while unwinding and rewinding the winding on the outer peripheral surface of said winding drum;

binding, after a predetermined quantity of the linear material has been wound, the terminal end of the winding of the weft linear material on said winding core to fix it thereon;

repeating the winding and the binding and fixing of the weft linear material on said winding core predetermined times;

supplying a synthetic resin to said weft linear material or to the winding on the entrance side or on the exit side of said winding disk;

hardening the synthetic resin layer formed on said winding core; and

cutting the hardened and formed hollow body into a predetermined size and finishing the external shape thereof.

2.     A method as set forth in Claim 1, wherein warp linear

- 21 -

0102393

materials are supplied to about said winding core in the longitudinal direction thereof on the entrance or the exit side of said winding drum.

3. A method as set forth in Claim 1, wherein said winding core is formed continuously of a synthetic resin and constitutes a component part of the formed hollow body.

4. A method as set forth in Claim 1, wherein said winding core is formed of an elastic tubular body of a predetermined shape, into which air is pressed and which is reciprocated.

5. A method for producing a hollow body, comprising the steps of:

feeding continuously a winding core of a predetermined shape along a predetermined passage;

inserting said winding core for movement coaxial with and relative to a winding drum and a winding disk;

disposing a bobbin having a weft linear material wound therearound at a predetermined position;

passing the weft linear material payed out from said bobbin through a guide hole provided in said winding disk and fixing it to an arbitrary position of said winding core;

rotating said winding disk in a first direction while moving said winding core in a predetermined direction, thereby winding the weft linear material on said winding core while winding the weft linear material on said winding drum;

binding, after a predetermined quantity of the linear material has been wound, the terminal end of the winding of the weft linear material on said winding core to fix it thereon;

rotating, after said binding and fixing, said winding disk in a second direction which is opposite to said first direction while moving said winding core in a predetermined direction, thereby winding the weft linear material on said winding core while unwinding and rewinding the winding on the outer peripheral surface of said winding drum;

binding, after a predetermined quantity of the linear material has been wound, the terminal end of the winding of the weft linear material on said winding core to fix it thereon;

repeating the winding and the binding and fixing of the weft linear material on said winding core predetermined times;

supplying a synthetic resin to said weft linear material or to the winding on the entrance side or on the exit side of said winding disk;

supplying an intermediate material about the synthetic resin layer formed on said winding core;

performing said winding and said supplying of the synthetic resin about said intermediate material layer;

hardening said synthetic resin layer and said intermediate material layer; and

cutting the hardened and formed hollow body into a predetermined size and finishing the external shape thereof.

6. A method as set forth in Claim 5, wherein warp linear materials are supplied to about said winding core in the longitudinal direction thereof on the entrance or the exit side of said winding drum.

7. A method as set forth in Claim 5, wherein said winding core is formed continuously of a synthetic resin and constitutes a component part of the formed hollow body.

8. An apparatus for producing a hollow body, comprising:

a winding core feeder for feeding continuously a winding core of a predetermined shape along a predetermined passage;

a bobbin disposed at a predetermined position and wound therearound with a weft linear material;

a winding disk supported coaxially and relatively movably with said winding core and having at least one guide hole;

a driving mechanism for rotating said winding disk alternately in opposite directions with a predetermined period and at a predetermined speed;

a winding drum disposed upstream of and adjacent to said winding disk with respect to the direction of movement of said winding core and supported coaxially and relatively movably with said winding core;

a binder disposed downstream of and adjacent to said winding disk with respect to the direction of movement of said winding core, for binding and fixing the outer periphery of said winding core with a predetermined period;

a synthetic resin feeder disposed on the entrance or the exit side of said winding disk, for feeding a synthetic resin to said weft linear material or to the winding;

a means for hardening the synthetic resin layer formed on said winding core; and

a means for cutting the hardened and formed hollow body into a predetermined size and finishing the external shape thereof.

9. An apparatus as set forth in Claim 8, wherein bobbins having warp linear materials wound therearound are disposed at predetermined positions and the warp linear materials are supplied to about said winding core in the longitudinal direction thereof on the entrance or the exit side of said winding drum.

10. An apparatus as set forth in Claim 8, wherein said winding core feeder is a means for feeding the winding core continuously from a synthetic resin.

11. An apparatus as set forth in Claim 8, wherein said winding core feeder uses an elastic tubular body as the winding core and includes a means for pressing air into said elastic tubular body.

12. An apparatus for producing a hollow body, comprising:

a winding core feeder for feeding continuously a winding core of a predetermined shape along a predetermined passage;

a bobbin disposed at a predetermined position and wound therearound with a weft linear material;

a winding disk supported coaxially and relatively movably with said winding core and having at least one guide hole;

a driving mechanism for rotating said winding disk alternately in opposite directions with a predetermined period and at a predetermined speed;

a winding drum disposed upstream of and adjacent to said winding disk with respect to the direction of movement of said winding core and supported coaxially and relatively movably with said winding core; .

a binder disposed downstream of and adjacent to said winding disk with respect to the direction of movement of said winding core, for binding and fixing the outer periphery of said winding core with a predetermined period;

a synthetic resin feeder disposed on the entrance or the exit side of said winding disk, for feeding a synthetic resin to said weft linear material or to the winding;

an intermediate material feeder for feeding an intermediate material about the synthetic resin layer formed on said winding core;

a means for hardening the synthetic resin layer and the intermediate material layer formed on said winding core; and

a means for cutting the hardened and formed hollow body into a predetermined size and finishing the external shape thereof.

13.    An apparatus as set forth in Claim 12, wherein bobbins having warp linear materials wound therearound are disposed at predetermined position and the warp linear materials are supplied to about said winding core in the longitudinal direction thereof on the entrance or the exit side of said winding drum.

14.    An apparatus as set forth in Claim 12, wherein said winding core feeder is a means for feeding the winding core continuously from a synthetic resin.

1

FIG. 1

(A)   P

(B)   P   S

(C)   M   P   P

(D)   P   P   M   S

(E)   P

(F)   S   P

0102393

F I G. 2

Synthetic Resin Feeding **3**

Winding Core Feeding **1** → Winding **2** → Hardening **4** → Finishing **5** → Products (A,B,E.F)

F I G. 3

Synthetic Resin Feeding **3a**

Synthetic Resin Feeding **3b**

Winding Core Feeding **1** → Winding **2a** → Winding **2b** → Hardening **4** → Finishing **5** → Products (C,

Intermediate Material Feeding **6**

3

FIG. 4

FIG. 5

FIG. 6

4

F I G. 7

F I G. 8

F I G. 9

F I G. 10

F I G. 21

F I G. 11

(A)

211

22

21

(B)

211

22

21

(C)

211

22

21

F I G. 11

F I G. 12

(A)

F I G. 13

(A)

(B)

8

F I G. 14

F I G. 20

F I G. 15

F I G. 16

10

F I G. 17

F I G. 18

FIG. 19

0102393

F I G. 22

F I G. 23

F I G. 24

F I G. 25

F I G. 26

F I G. 27

F I G. 28

F I G. 29

14

F I G. 30

**I. CLASSIFICATION OF SUBJECT MATTER** (if several classification symbols apply indicate all) [3]

According to International Patent Classification (IPC) or to both National Classification and IPC

Int. Cl.[3] B29D 3/02

**II. FIELDS SEARCHED**

Minimum Documentation Searched [4]

| Classification System | Classification Symbols |
|---|---|
| IPC | B29D 3/02 |

Documentation Searched other than Minimum Documentation
to the Extent that such Documents are Included in the Fields Searched [5]

| | |
|---|---|
| Jitsuyo Shinan Koho | 1950 - 1982 |
| Kokai Jitsuyo Shinan Koho | 1971 - 1982 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | US, A, 3616072, 26 October, 1971 (26.10.71) FIGI, Howker Siddeley Dynamics Ltd. | 1-14 |
| Y | JP, B1, 41-3555, 1 March, 1966 (01.03.66) Decolated Metal Manufacturing Co. Inc. | 1-14 |
| A | JP, A, 53-110685, 27 September, 1978 (27.09.78) Kuraray Plastics Kabushiki Kaisha | 1-14 |
| A | JP, A, 51-25584, 2 March, 1976 (02.03.76) Kiya Satsuki | 1-14 |
| A | JP, B1, 45-37676, 28 November, 1970 (28.11.70) United Aircraft Corp. | 5-7, 12-14 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| August 19, 1982 (19.08.82) | August 23, 1982 (23.08.82) |

| International Searching Authority [1] | Signature of Authorized Officer [20] |
|---|---|
| Japanese Patent Office | |

Form PCT/ISA/210 (second sheet) (October 1981)